(19) **Europäisches Patentamt European Patent Office Office européen des brevets**

(11) **EP 2 671 330 B1**

(12) **FASCICULE DE BREVET EUROPEEN**

(45) Date de publication et mention
de la délivrance du brevet:
**19.06.2019 Bulletin 2019/25**

(21) Numéro de dépôt: **12706641.3**

(22) Date de dépôt: **27.01.2012**

(51) Int Cl.:
***H04B 10/071*** *(2013.01)*

(86) Numéro de dépôt international:
**PCT/FR2012/050180**

(87) Numéro de publication internationale:
**WO 2012/104528 (09.08.2012 Gazette 2012/32)**

(54) **SYSTEME DE DETERMINATION D'UN TEMPS DE PROPAGATION D'UN SIGNAL OPTIQUE ENTRE DEUX EQUIPEMENTS OPTIQUES AU MOYEN D'UNE LIAISON OPTIQUE**

SYSTEM ZUR BESTIMMUNG DER ÜBERTRAGUNGSZEIT EINES OPTISCHEN SIGNALS ZWISCHEN ZWEI OPTISCHEN VORRICHTUNGEN ÜBER EINE OPTISCHE VERKNÜPFUNG

SYSTEM FOR DETERMINING A PROPAGATION TIME OF AN OPTICAL SIGNAL BETWEEN TWO OPTICAL DEVICES USING AN OPTICAL LINK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2011 FR 1150719**

(43) Date de publication de la demande:
**11.12.2013 Bulletin 2013/50**

(73) Titulaire: **Orange**
**75015 Paris (FR)**

(72) Inventeurs:
• **LE ROUZIC, Esther**
**F-22560 Trébeurden (FR)**
• **JOBERT, Sébastien**
**F-22140 Begard (FR)**
• **BROCHIER, Nicolas**
**F-22970 Ploumagoar (FR)**

(56) Documents cités:
**EP-A1- 1 758 279 GB-A- 2 416 587**
**US-A1- 2005 226 614 US-B1- 6 876 488**

• **BARNARD C W ET AL: "BIDIRECTIONAL FIBER AMPLIFIERS", IEEE PHOTONICS TECHNOLOGY LETTERS, IEEE SERVICE CENTER, PISCATAWAY, NJ, US, vol. 4, no. 8, 1 août 1992 (1992-08-01), pages 911-913, XP000293633, ISSN: 1041-1135, DOI: 10.1109/68.149906**

**Description**

L'invention se situe dans le domaine des systèmes de transmission optique, et plus particulièrement dans le domaine de la détermination d'un temps de propagation d'un signal optique entre deux équipements optiques au moyen d'une liaison optique.

Pour mesurer un temps de propagation d'un signal optique entre deux équipements optiques reliés par deux liaisons distinctes, une pour chaque sens de transmission, il est connu de mesurer un temps de propagation aller et retour. Une liaison optique est composée d'une succession de tronçons optiques. Un tronçon optique comprend notamment une fibre optique. Un signal de mesure est envoyé par un équipement optique initiant la mesure vers l'équipement optique voisin par la première liaison optique. Ce dernier répond au signal de mesure vers l'équipement optique initiateur par la seconde liaison optique. Dans un réseau de transmission optique, lorsque les longueurs respectives des liaisons des deux sens ne sont pas identiques, la valeur du temps de propagation estimée pour chacune des deux liaisons est entachée d'une erreur difficilement quantifiable.

Or, de nombreuses applications nécessitent une connaissance précise de ce temps de propagation d'un signal optique d'un équipement à un autre. A titre d'exemple, on peut citer des méthodes de réservation de ressources ou bien encore des méthodes de synchronisation d'équipements optiques.

Afin de déterminer de façon plus précise le temps de propagation d'un signal optique sur une liaison optique entre deux équipements, il existe des méthodes, telles que celle décrite dans le brevet FR 2896644, permettant de réfléchir au niveau de l'équipement optique voisin un signal de mesure transmis par l'équipement initiateur de la mesure sur la liaison optique, éventuellement par l'intermédiaire d'autres équipements optiques. Ce dernier reçoit alors un signal en retour sur la même liaison optique et dans le sens inverse du sens de propagation du signal de mesure. L'équipement initiateur peut alors déterminer le temps de propagation sur la liaison optique. Toutefois, dans certains cas, par exemple des liaisons de grande distance, des équipements d'amplification sont prévus entre les deux équipements. Un équipement d'amplification permet d'amplifier un signal reçu en provenance de l'équipement initiateur à destination de l'équipement voisin dans le sens de propagation. Toutefois, un tel équipement d'amplification joue également un rôle d'isolateur pour les signaux reçus dans le sens inverse du sens de propagation sur cette liaison optique. Ainsi, lors de la mise en oeuvre de la méthode du brevet FR 2896644, le signal en retour n'est pas transmis au-delà du dernier équipement d'amplification qui se situe entre les deux équipements, c'est-à-dire le premier que rencontre le signal en retour. Afin de déterminer un temps de propagation sur la liaison optique, il est alors nécessaire de mettre en place notamment des mesures d'un temps de propagation pour chacun des tronçons optiques reliant deux des équipements d'amplification. Une telle méthode est alors complexe à mettre en oeuvre sur un réseau de transmission optique.

La demande GB 2 416 587 décrit un système de supervision utilisant des senseurs à base de fibres optiques, dans lequel une impulsion optique réfléchie ou réfractée est analysée pour effectuer des mesures de paramètres physiques tels que la température, sans pour autant qu'un temps de propagation de cette impulsion en elle-même soit déterminée spécifiquement.

Le brevet US 6 876 488 décrit un système basé sur l'amplification discrète de signaux optiques, par le biais du pompage optique d'une fibre compensatrice de dispersion. Toutefois, ce brevet n'aborde aucunement le sujet de la mesure du temps de propagation d'un signal optique dans une fibre optique.

Enfin, la demande EP 1 758 279 décrit un système de transmission OTDR à deux fibres optiques unidirectionnelles dans lequel un signal optique de retour est extrait d'une des fibres optiques pour être inséré dans l'autre fibre optique. Toutefois, dans un tel système, ni la problématique de la dispersion chromatique pouvant affecter le système, ni l'éventuelle prise en compte de sa compensation dans la mesure du temps de propagation d'un signal optique, ne sont abordées.

Un des buts de l'invention est de remédier à des insuffisances/inconvénients de l'état de la technique et/ou d'y apporter des améliorations.

Selon un premier aspect, l'invention a pour objet un système de détermination d'un temps de propagation d'un signal optique, dans lequel un premier équipement du système comprend des moyens de transmission d'un signal optique de mesure dans un sens de propagation vers un deuxième équipement du système au moyen d'une liaison optique, des moyens de réception d'un signal optique en retour en provenance du deuxième équipement au moyen de ladite liaison optique dans le sens inverse du sens de propagation et des moyens de détermination dudit temps de propagation à partir d'un instant d'émission du signal de mesure et d'un instant de réception du signal en retour,
les signaux optiques transmis au moyen de ladite liaison optique traversant au moins un équipement intermédiaire comprenant au moins un amplificateur, agencé pour amplifier des signaux optiques reçus dans le sens de propagation.

Le système de mesure comprend en outre :

- des premiers moyens d'extraction de la liaison optique du signal en retour, lesdits premiers moyens d'extraction étant situés en sortie dudit équipement intermédiaire ;
- des moyens de régénération d'un signal optique et,
- des moyens d'injection d'un signal optique régénéré sur la liaison optique, lesdits moyens d'injection étant placés en entrée dudit équipement intermédiaire,

le signal en retour extrait étant régénéré par les moyens de régénération.

Le signal en retour peut correspondre au signal de mesure dans certains modes de réalisation dans lequel le bouclage est optique. Dans d'autres modes de réalisation dans lequel le bouclage comprend un traitement électronique, le signal en retour peut correspondre à un signal généré par le deuxième équipement, éventuellement différent du signal dans le sens aller.

Le signal de mesure peut être une impulsion lumineuse, ou bien encore un paquet donné ou bien encore une trame donnée.

Les moyens de régénération au niveau de l'équipement intermédiaire comprennent par exemple un module de remise en forme, constitué d'un récepteur, d'une ré-amplification et d'un émetteur. Les moyens de régénération peuvent également comprendre un filtre centré sur la longueur d'onde utilisée pour transporter le signal en retour.

Le premier équipement peut ainsi recevoir le signal en retour sur la liaison optique par l'intermédiaire de laquelle il a émis le signal de mesure sans être perturbé par la présence d'équipements intermédiaires comprenant des amplificateurs, traversés par les signaux optiques transmis du premier au deuxième équipement dans le sens de propagation. Le signal en retour étant reçu au moyen de la même liaison optique, le premier équipement peut alors déterminer le temps de propagation sur la liaison optique notamment à partir de l'instant d'émission du signal de mesure et de l'instant de réception du signal en retour. Il n'est pas nécessaire de déterminer des temps de propagation pour chacun des tronçons entre deux équipements intermédiaires. Ceci facilite ainsi la mesure du temps de propagation.

L'invention trouve ainsi une application avantageuse pour déterminer une asymétrie entre deux liaisons optiques, dans le cas où une première liaison optique est utilisée pour la transmission des signaux du premier au deuxième équipement et une deuxième liaison optique, distincte de la première liaison, est utilisée pour la transmission des signaux optiques du deuxième au premier équipement.

Le temps de propagation déterminé peut également être utilisé lors de la mise en oeuvre de méthodes de réservation de ressources dans des réseaux de transmission optique à commutation de circuit ou bien encore à commutation de rafales OBS, pour « Optical Burst Switching ».

Par la suite, l'équipement intermédiaire est composé d'une chaîne d'éléments, comprenant au moins un amplificateur relié à un module de compensation de la dispersion chromatique. Il s'agit par exemple d'un premier amplificateur, relié au module de compensation, lequel est relié à un deuxième amplificateur. On se restreint par la suite à un type de modules de compensation introduisant un retard.

Dans ce mode de réalisation, le système comprend en outre des moyens de traitement, agencés pour obtenir un instant de réception du signal en retour prenant en compte ce retard introduit par le module de compensation.

A titre d'exemple, un tel module de compensation peut être un module de compensation de la dispersion chromatique comprenant une fibre de compensation de dispersion chromatique. Il a été observé que la longueur de cette fibre de compensation varie entre des modules spécifiés pour compenser une même longueur de fibre de ligne. A titre d'exemple, des mesures effectuées sur quatre modules spécifiés pour compenser 60 km de fibre de ligne ont permis de déterminer un écart maximum de 11 ps/nm ce qui représente environ 110 mètres d'incertitude et 0,550 $\mu$secondes d'écart en supposant que les fibres dans les modules de compensation ont une dispersion de 100 ps/nm/km. Dans le système décrit précédemment, le signal en retour contourne l'équipement intermédiaire. Dans un tel système, le signal de mesure émis par le premier équipement traverse le module de compensation contrairement au signal en retour. La présence d'un tel module dans un équipement intermédiaire perturbe ainsi la mesure du temps de propagation. Il est alors nécessaire d'intervenir sur les sites des équipements intermédiaires pour mesurer au préalable les temps de propagation respectifs pour chacun des modules de compensation présents sur la liaison optique, en complément des mesures pour chacun des tronçons de fibre entre chaque équipement intermédiaire.

Selon ce mode de réalisation de l'invention et grâce aux moyens de traitement du système, il est possible d'obtenir un instant de réception du signal en retour prenant en compte le ou les retards introduits par un ou des modules de compensation de dispersion chromatique, sans intervention sur le site de l'équipement intermédiaire.

Dans une première variante d'un deuxième mode de réalisation, les moyens de détermination dans le premier équipement et les moyens suivants au niveau de l'équipement intermédiaire forment les moyens de traitement :

- des deuxièmes moyens d'extraction de la liaison optique du signal de mesure en entrée dudit équipement intermédiaire, ledit signal en entrée étant transmis dans le sens de propagation ;
- des troisièmes moyens d'extraction de la liaison optique du signal de mesure en sortie dudit équipement intermédiaire, ledit signal en sortie étant transmis dans le sens de propagation ;
- des moyens de traitement du signal en sortie extrait, agencés pour retarder le signal en sortie extrait,

le signal en entrée extrait et le signal en sortie une fois traité étant également régénérés par les moyens de régénération,
et dans lequel les moyens de détermination sont en outre agencés pour obtenir le retard introduit par le module de compensation à partir des signaux en entrée et en sortie de l'équipement intermédiaire.

Pour les variantes de ce deuxième mode de réalisation, on prélève en entrée et en sortie de l'équipement intermédiaire le signal optique transmis dans le sens de propagation. Le signal prélevé en sortie est retardé d'une durée fixe, afin d'éviter qu'il soit superposé au signal prélevé en entrée.

Le premier équipement reçoit alors une paire de signaux optiques pour chaque équipement intermédiaire de la liaison optique à mesurer, en complément du signal en retour. Cette paire est composée d'un premier signal correspondant au signal prélevé en entrée de l'équipement intermédiaire et d'un deuxième signal correspondant au signal prélevé en sortie de l'équipement intermédiaire. En prenant en compte les instants de réception de l'ensemble des paires de signaux optiques et du signal en retour, ainsi que les retards de durée fixe introduits sur les signaux prélevés en sortie de l'équipement intermédiaire, le premier équipement peut déterminer un temps de propagation entre les deux équipements au moyen de la liaison optique. La détermination du temps de propagation est ainsi plus aisé à mettre en oeuvre car elle ne nécessite pas d'intervenir sur le site de l'équipement intermédiaire, ni de mesurer les temps de propagation des tronçons. De ce fait, il est possible d'effectuer cette mesure sans couper l'acheminement du trafic.

Il est ici souligné que le système peut également comprendre des équipements intermédiaires qui ne comprennent pas ce type de module de compensation. Ce deuxième mode de réalisation est compatible avec de tels équipements. Toutefois, on peut prévoir pour de tels équipements intermédiaires uniquement les moyens décrits précédemment et permettant au signal en retour de ne pas être bloqué par l'équipement intermédiaire.

Il est également souligné que ce deuxième mode de réalisation permet d'obtenir des temps de propagation pour chacun des éléments de la liaison, c'est-à-dire les tronçons et le retard introduit par le module de compensation.

Selon une deuxième variante de ce deuxième mode de réalisation, les moyens de détermination dans le premier équipement et les moyens suivants au niveau de l'équipement intermédiaire forment les moyens de traitement :

- des deuxièmes moyens d'extraction de la liaison optique du signal de mesure en entrée dudit module de compensation de l'équipement intermédiaire, ledit signal en entrée étant transmis dans le sens de propagation ;
- des troisièmes moyens d'extraction de la liaison optique du signal de mesure en sortie de l'équipement intermédiaire, ledit signal en sortie étant transmis dans le sens de propagation ;
- des moyens de traitement du signal en sortie, agencés pour retarder le signal en sortie ;

le signal en entrée et le signal optique une fois traité étant également régénérés par les moyens de régénération, et dans lequel les moyens de détermination sont en outre agencés pour obtenir le retard introduit par le module de compensation à partir des signaux en entrée et en sortie de l'équipement intermédiaire.

On se place ici dans le cas particulier d'un équipement intermédiaire permettant de prélever un signal en entrée du module de compensation. Dans ce cas, le signal prélevé en entrée du module de compensation peut être atténué avant régénération.

Cette variante présente l'avantage complémentaire de permettre un prélèvement moins important du signal, car il est effectué après une première amplification.

Optionnellement, il est prévu avant régénération des moyens d'atténuation du signal en entrée extrait par les deuxièmes moyens.

Selon un troisième mode de réalisation, les moyens de détermination dans le premier équipement et les moyens suivants au niveau de l'équipement intermédiaire forment les moyens de traitement :

- des moyens de dérivation, agencés pour réinjecter en sortie dudit équipement intermédiaire uniquement le signal de mesure, les signaux optiques autres que le signal de mesure étant réinjectés en entrée dudit équipement intermédiaire :
- des moyens de commutation d'un signal optique transmis dans le sens de propagation, placés en entrée dudit équipement intermédiaire, agencés pour commuter le signal optique en entrée vers les moyens de dérivation,

et dans lequel les moyens de détermination sont en outre agencés pour mettre en oeuvre une première mesure, commander les moyens de commutation et mettre en oeuvre une deuxième mesure afin de déterminer le retard introduit par le module de compensation.

Ce troisième mode de réalisation nécessite la mise en oeuvre de deux phases de mesure. Dans une première phase, les moyens de commutation sont en position de fonctionnement nominal, correspondant au premier mode de réalisation. Dans une deuxième phase, les moyens de commutation sont dans une position permettant d'acheminer le signal de mesure en évitant de traverser l'équipement intermédiaire. Il est ici souligné que cette position ne modifie pas l'acheminement de signaux optiques autres que le signal de mesure, qui traversent toujours l'équipement intermédiaire. Le trafic sur les longueurs d'onde autres que celle utilisée pour la mesure n'est pas bloqué pour réaliser la mesure. Lors de cette deuxième phase, un deuxième signal en retour est alors transmis en provenance du deuxième équipement. Le premier équipement peut alors déterminer un temps de propagation entre les deux équipements à partir de l'instant de réception du signal en retour transmis en mode de fonctionnement nominal, de l'instant de réception du signal en retour transmis lorsque le signal de mesure contourne l'équipement intermédiaire, et des instants d'émission des signaux de mesure. Ce troisième mode de réalisation présente également les avantages décrits précédemment en relation avec les deux premiers modes de réalisation.

Comme indiqué précédemment en relation avec le deuxième mode de réalisation, le système peut également comprendre des équipements intermédiaires qui ne comprennent pas de module de compensation de ce type. Ce troisième mode de réalisation est compatible avec de tels équipements. Toutefois, on peut prévoir pour de tels équipements intermédiaires uniquement les moyens décrits précédemment et permettant au signal en retour de ne pas être bloqué par l'équipement intermédiaire.

Selon une première variante d'un quatrième mode de réalisation, l'équipement intermédiaire étant en outre agencé pour permettre un passage d'un signal optique uniquement dans le module de compensation, ce module de compensation forme les moyens de traitement et les moyens de régénération sont composés de deux étages :

- un premier étage régénérant le signal en retour extrait,
- un deuxième étage régénérant un signal optique obtenu après passage dans ledit module du signal en sortie du premier étage.

Dans ce quatrième mode de réalisation, le signal en retour traverse le module de compensation de sorte qu'il est retardé de la même manière que le signal de mesure. Il est alors possible de déterminer un temps de propagation à partir des instants d'émission du signal de mesure et de réception du signal en retour.

Ce quatrième mode de réalisation présente également les avantages généraux décrits précédemment en relation avec les deux premiers modes de réalisation.

Comme indiqué précédemment en relation avec le deuxième mode de réalisation, le système peut également comprendre des équipements intermédiaires qui ne comprennent pas de module de compensation de ce type. Ce quatrième mode de réalisation est compatible avec de tels équipements. Toutefois, on peut prévoir pour de tels équipements intermédiaires uniquement les moyens décrits précédemment et permettant au signal en retour de ne pas être bloqué par l'équipement intermédiaire.

Selon une deuxième variante de ce quatrième mode de réalisation, les moyens de régénération font partie d'un autre équipement intermédiaire prévu pour la transmission d'un signal optique en provenance du deuxième équipement vers le premier équipement au moyen d'une autre liaison optique, distincte de ladite liaison optique.

Cette deuxième variante permet de réutiliser des moyens existants prévus pour l'autre liaison optique.

Selon un deuxième aspect, l'invention concerne un dispositif de dérivation, disposé au niveau d'un équipement intermédiaire d'un système de détermination d'un temps de propagation d'un signal optique, dans lequel un premier équipement du système comprend des moyens de transmission d'un signal optique de mesure dans un sens de propagation vers un deuxième équipement du système au moyen d'une liaison optique, des moyens de réception d'un signal optique en retour en provenance du deuxième équipement au moyen de ladite liaison optique dans le sens inverse du sens de propagation et des moyens de détermination dudit temps de propagation à partir d'un instant d'émission du signal de mesure et d'un instant de réception du signal en retour, les signaux optiques transmis au moyen de ladite liaison optique traversant ledit équipement intermédiaire comprenant au moins un amplificateur, agencé pour amplifier des signaux optiques reçus dans le sens de propagation et un module de compensation de dispersion chromatique introduisant un retard. Le dispositif comprend des moyens de régénération d'un signal optique, agencés pour coopérer avec des premiers moyens d'extraction de la liaison optique du signal en retour en sortie dudit équipement intermédiaire, pour régénérer le signal en retour extrait et pour coopérer avec des moyens pour injecter sur la liaison optique en entrée dudit équipement intermédiaire le signal en retour extrait et régénéré, et des moyens coopérant avec les moyens de détermination pour obtenir un instant de réception du signal en retour prenant en compte ledit retard introduit par ledit module de compensation.

Selon un troisième aspect, l'invention concerne un procédé de détermination d'un temps de propagation d'un signal optique, adapté en fonction du mode de réalisation mis en oeuvre au niveau d'un équipement intermédiaire dans un système de détermination selon le premier aspect.

L'invention sera mieux comprise à l'aide de la description suivante de modes de réalisation particuliers du système de l'invention, en référence aux dessins annexés sur lesquels :

- la figure 1 représente deux équipements optiques connectés au moyen de deux liaisons optiques ;
- la figure 2 représente une partie d'un système de détermination selon un premier mode particulier de réalisation de l'invention ;
- la figure 3a représente une partie d'un système de détermination selon une première variante d'un deuxième mode particulier de réalisation de l'invention ;
- la figure 3b représente une partie d'un système de détermination selon une deuxième variante du deuxième mode particulier de réalisation de l'invention ;
- la figure 4 représente une partie d'un système de détermination selon un troisième mode particulier de réalisation de l'invention ;

- la figure 5a représente une partie d'un système de détermination selon une première variante d'un quatrième mode particulier de réalisation de l'invention ;
- la figure 5b représente une partie d'un système de détermination selon une deuxième variante du quatrième mode particulier de réalisation de l'invention ;
- la figure 6 représente les étapes d'un procédé de détermination d'un temps de propagation mis en oeuvre dans un système de détermination selon le deuxième mode particulier de réalisation de l'invention ;
- la figure 7 représente les étapes d'un procédé de détermination d'un temps de propagation mis en oeuvre dans un système de détermination selon le troisième mode particulier de réalisation de l'invention.

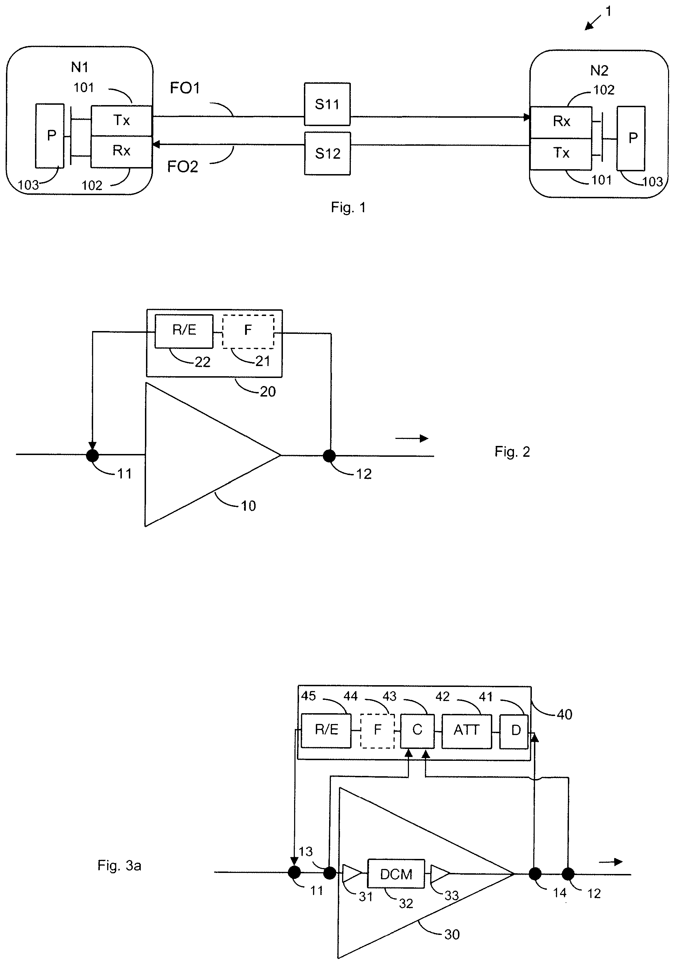

La figure 1 représente un système 1 de détermination d'un temps de propagation d'un signal optique dans un réseau de transmission optique. Ce système 1 comprend deux équipements optiques N1, N2. Un signal optique est transmis du premier équipement N1 vers le deuxième équipement N2 au moyen d'une première liaison optique FO1, composée de tronçons de fibre optique. Par la suite, cette première liaison optique est appelée également première fibre optique. Un autre signal optique est transmis du deuxième équipement N2 vers le premier équipement N1 au moyen d'une deuxième liaison optique FO2, composée de tronçons de fibre optique. Par la suite, cette deuxième liaison optique est appelée également deuxième fibre optique.. Cette deuxième fibre optique FO2 est distincte de la première fibre optique FO1. Par la suite, on se restreint à ce cas particulier de deux fibres optiques distinctes.

Dans un mode de fonctionnement nominal, les deux équipements s'échangent des signaux optiques au moyen des deux fibres optiques, une pour chaque sens de communication, appelé également sens de propagation.

Un premier site d'amplification S11, comprenant un équipement intermédiaire, est situé sur la première fibre optique FO1 et est agencé pour amplifier des signaux reçus sur la première fibre optique FO1 transmis dans le sens de propagation en provenance du premier équipement N1 à destination du deuxième équipement N2, par l'intermédiaire le cas échéant d'autres sites d'amplification.

Un deuxième site d'amplification S12 est situé sur la deuxième fibre optique FO2 et est agencé pour amplifier des signaux reçus sur la deuxième fibre optique FO2, dans le sens inverse du sens de propagation, en provenance du deuxième équipement N2 à destination du premier équipement N1, par l'intermédiaire le cas échéant d'autres sites d'amplification.

Afin de ne pas surcharger la figure 1, un seul site d'amplification est représenté pour chacun des sens de propagation des signaux optiques. Aucune limitation n'est attachée au nombre de sites d'amplification.

Par convention, les signaux avant amplification sont appelés les signaux en entrée et les signaux une fois amplifiés sont appelés signaux en sortie.

Pour déterminer un temps de propagation d'un signal optique, le premier équipement N1 émet un signal de mesure $Sig_M$ à destination du deuxième équipement N2 sur la première fibre optique FO1 et reçoit, grâce à des moyens de bouclage, non représentés sur la figure 1, un signal en retour $Sig_R$ émis par le deuxième équipement sur la première fibre optique dans le sens inverse du sens de propagation. Le signal en retour empruntant la même fibre optique que le signal de mesure, il est alors possible de déterminer le temps de propagation sur cette fibre optique à partir d'une mesure d'une durée entre l'instant d'émission du signal de mesure $Sig_M$ et l'instant de réception du signal en retour $Sig_R$. Le temps de propagation ainsi déterminé n'est pas entaché d'une erreur liée à l'asymétrie des fibres optiques.

La description se place par la suite dans le cadre d'une détermination d'un temps de propagation d'un signal optique du premier équipement N1 vers le deuxième équipement N2.

Le premier équipement N1 comprend :

- un module de transmission 101, associé à la première fibre optique FO1, agencé pour émettre un signal optique au moyen de la première fibre optique FO1 ;
- un module de réception 102, associé à la deuxième fibre optique FO2, agencé pour recevoir un signal optique au moyen de la deuxième fibre optique FO2 ;
- un module de traitement 103.

De manière équivalente, le deuxième équipement N2 comprend :

- un module de réception 102, associé à la première fibre optique FO1, agencé pour recevoir un signal optique au moyen de la première fibre optique FO1 ;
- un module de transmission 101, associé à la deuxième fibre optique FO2, agencé pour transmettre un signal optique au moyen de la deuxième fibre optique FO2 ;
- un module de traitement 103.

Le premier équipement N1 comprend également des moyens de réception, non représentés sur la figure 1, agencés pour recevoir sur la première fibre optique FO1 le signal en retour en provenance du deuxième équipement. Il peut s'agir de moyens spécifiques ou bien encore de moyens de ré aiguillage de signaux reçus sur la première fibre optique FO1 vers les moyens de réception 102. Le deuxième équipement N2 comprend en outre des moyens de bouclage, non représentés sur la figure 1, agencés pour émettre un signal en retour sur réception du signal de mesure.

Dans une première mise en oeuvre, les moyens de bouclage peuvent être composés d'éléments optiques uniquement.

Pour déterminer un temps de propagation d'un signal optique au moyen de la première fibre optique FO1 entre les deux équipements N1, N2, le premier équipement N1 émet une requête de mesure d'un temps de propagation d'un signal de mesure au moyen de la première fibre FO1 à destination du deuxième équipement N2, qui acquitte cette requête. Si nécessaire, le deuxième équipement N2 configure alors les moyens de bouclage vers un deuxième mode de fonctionnement, dans lequel un signal en retour est injecté dans la première fibre optique FO1.

Le premier équipement N1 transmet le signal de mesure $Sig_M$ au moyen de la première fibre optique FO1 à destination du deuxième équipement N2 et mémorise l'instant d'émission $t_e$. Le signal de mesure est alors traité optiquement par les moyens de bouclage du deuxième équipement N2, qui injectent dans la première fibre optique FO1 un signal en retour $Sig_R$. Le signal en retour est reçu par le premier équipement N1 et l'instant de réception $t_r$ est également mémorisé. Le signal en retour en provenance du deuxième équipement N2 correspond au signal de mesure émis par le premier équipement N1, atténué le cas échéant. Le premier équipement N1 détermine alors le temps de propagation du signal de mesure $t_{FO1}$ à partir des instants d'émission du signal de mesure et de réception du signal en retour :

$$t_{FO1} = (t_r - t_e)/2$$

A titre d'exemples non limitatifs de ces moyens de bouclage, on peut citer :

- un filtre réflectif, tel qu'un réseau de Bragg réflectif ;
- une association d'un commutateur optique et d'un circulateur. Le commutateur optique permet dans une première position de diriger un signal optique reçu du premier équipement N1 sur la première fibre optique FO1 vers le module de réception 102 du deuxième équipement N2 en dehors des périodes de mesure du temps de propagation de la première fibre optique FO1. Dans une deuxième position, le commutateur optique transmet le signal optique reçu du premier équipement N1 vers le circulateur, qui transfère le signal dans une boucle et le transmet ensuite au commutateur optique. Ce dernier le réinjecte dans la première fibre optique. Ainsi, dans cette deuxième position du commutateur, les moyens de bouclage permettent de réinjecter le signal optique reçu, celui-ci une fois réinjecté devenant le signal en retour pendant les périodes de mesure du temps de propagation de la première fibre optique FO1 ;
- cette même association complétée d'un amplificateur ;
- un commutateur optique, un amplificateur et un coupleur. Le coupleur est placé sur la première fibre optique FO1 pour recevoir les signaux optiques en provenance du premier équipement N1 et les transmettre au commutateur optique et pour injecter dans la première fibre optique FO1 un signal optique reçu de l'amplificateur. Dans une première position du commutateur optique, un signal optique reçu sur la première fibre optique FO1 par l'intermédiaire du coupleur est transmis au module de réception 102 du deuxième équipement N2. Dans une deuxième position du commutateur optique, un signal optique reçu sur la première fibre optique FO1 par l'intermédiaire du coupleur est transmis à l'amplificateur. L'amplificateur amplifie le signal optique et le transmet au coupleur qui l'injecte dans la première fibre optique FO1 à destination du premier équipement N1, celui-ci une fois injecté devenant le signal en retour pendant les périodes de mesure du temps de propagation.

Le signal de mesure émis peut par exemple consister en une impulsion lumineuse, ou encore un signal d'horloge envoyé pendant une durée prédéterminée, ou encore une modulation particulière d'un signal lumineux, ou encore une trame ou un paquet prédéterminés.

Dans une deuxième mise en oeuvre, les moyens de bouclage peuvent comprendre un traitement électronique contribuant au bouclage.

Pour ce deuxième cas, le signal de mesure peut consister en une impulsion lumineuse, ou encore un signal d'horloge envoyé pendant une durée prédéterminée, ou encore une modulation particulière du signal lumineux, ou encore une trame ou un paquet pouvant être facilement identifiés par le deuxième équipement N2 comme une trame ou paquet de mesure de temps de propagation. Le signal en retour peut consister en une trame ou un paquet indiquant au premier équipement N1 le temps de traitement électronique au niveau du deuxième équipement N2. Il peut également être identique au signal de mesure si le temps de traitement électronique est transmis par d'autres moyens au premier équipement N1.

A titre de premier exemple illustrant ce type de moyens de bouclage, les premier et deuxième équipements comprennent respectivement un commutateur optique. Au niveau du premier équipement N1, dans un premier mode de fonctionnement, correspondant à une première position dite position parallèle, le commutateur optique permet de diriger un signal optique transmis par le module de transmission 101 du premier équipement N1 vers le deuxième équipement N2 sur la première fibre optique FO1 et un signal optique reçu en provenance du deuxième équipement N2 sur la deuxième fibre optique FO2 vers le module de réception 102 du premier équipement N1. Dans un deuxième mode de fonctionnement, correspondant à une deuxième position dite position croisée, le commutateur optique permet de diriger un signal optique transmis par le module de transmission 101 du premier équipement N1 vers le deuxième équipement N2 sur la deuxième fibre optique FO2 et un signal optique reçu en provenance du deuxième équipement N2 sur la première fibre optique FO1 vers le module de réception 102 du premier équipement N1. Au niveau du deuxième équipement N2, en position parallèle, le commutateur optique permet de diriger un signal optique reçu sur la première fibre optique FO1 vers le module de réception 102 du deuxième équipement N2 et un signal optique reçu en provenance du module de transmission 101 du deuxième équipement N2 vers le premier équipement N1 sur la deuxième fibre optique FO2. En position croisée, le commutateur optique transmet un signal optique reçu sur la deuxième fibre optique FO2 vers le module de réception 102 du deuxième équipement N2 et transmet un signal optique reçu du module de transmission 101 du deuxième équipement N2 vers le premier équipement N1 au moyen de la première fibre optique FO1. Les commutateurs optiques des premier et deuxième équipements sont positionnés initialement en position parallèle.

Le premier équipement N1 émet une requête de mesure du temps de propagation d'un signal de mesure au moyen de la première fibre FO1 à destination du deuxième équipement N2, qui l'acquitte. Le premier équipement N1 transmet alors le signal de mesure $Sig_M$ au moyen de la première fibre optique FO1, mémorise l'instant d'émission $t_e$ et configure immédiatement après la transmission du signal de mesure les moyens nécessaires à la réception du signal en retour, c'est-à-dire le commutateur optique en position croisée. Le deuxième équipement N2 reçoit le signal de mesure $Sig_M$, mémorise l'instant de réception du signal de mesure $Sig_M$ pour déterminer le temps de traitement électronique interne et configure alors le commutateur optique en position croisée dès réception du signal de mesure. Le temps de traitement interne est déterminé par le deuxième équipement N2. Ce temps de traitement interne $t_{int}$ prend en compte le temps nécessaire à la configuration du commutateur optique. Le deuxième équipement N2 émet le signal en retour $Sig_R$, celui-ci comprenant le temps de traitement interne déterminé $t_{int}$. Le temps de traitement interne peut également être transmis dans un second message de réponse ultérieur. L'instant de réception $t_r$ du signal en retour est mémorisé par le premier équipement N1.

Le premier équipement N1 détermine alors le temps de propagation $t_{FO1}$ du signal de mesure à partir des instants d'émission du signal de mesure, de réception du signal en retour et du temps de traitement interne au deuxième équipement N2 reçu :

$$t_{FO1} = (t_r - t_e - t_{int})/2$$

A l'issue de cette mesure, les premier et deuxième équipements reconfigurent leurs commutateurs optiques respectifs en position parallèle.

Le deuxième mode de réalisation peut avantageusement être mis en oeuvre en utilisant les messages définis par le protocole PTP. Le message PTP « Peer_Delay_Request » est alors le signal de mesure émis par le premier équipement N1 et le message PTP « Peer_Delay_Response » le signal en retour. Dans le cas où le temps de traitement interne est transmis indépendamment du signal en retour, il est possible d'utiliser également le message PTP « Peer_Delay_Response_Follow_up ». Ces signaux utilisés pour la mesure sont en charge de transporter les estampilles temporelles nécessaires pour indiquer au premier équipement N1 le temps de traitement électronique.

A titre de deuxième exemple illustrant ce type de moyens de bouclage, à la place du commutateur optique, le premier équipement N1 comprend des moyens de bouclage comprenant un commutateur optique, un isolateur et un coupleur. Le commutateur optique permet de faire émettre le module de transmission 101 vers la deuxième fibre FO2 pendant la période de mesure. L'isolateur permet d'éviter que le signal de mesure dans le sens aller ne soit reçu par le module de transmission 101 pendant la période de mesure. Un atténuateur variable est placé entre les première et deuxième fibres optiques et permet de s'assurer qu'en dehors des périodes de mesure, le signal rétrodiffusé de la première fibre FO1 ne perturbe pas le module de réception 102 du premier équipement N1. De manière équivalente, le deuxième équipement N2 comprend des moyens de bouclage comprenant un commutateur optique, un isolateur et un coupleur. Le commutateur optique permet de faire émettre le module de transmission 101 vers la première fibre FO1 pendant la période de mesure. L'isolateur permet d'éviter que le signal de mesure dans le sens aller ne soit reçu par le module de transmission 101 pendant la période de mesure. Un atténuateur variable est placé entre les première et deuxième fibres optiques et permet de s'assurer qu'en dehors des périodes de mesure, le signal envoyé par le module de transmission 101 ne perturbe pas le module de réception 102 du premier équipement N1.

Lorsqu'une mesure d'un temps de propagation sur la première fibre optique FO1 est déclenchée par le premier équipement N1, l'atténuateur du premier équipement N1 ouvre la connexion optique entre la première fibre optique FO1 et le module de réception 102 du premier équipement N1 et le commutateur optique du deuxième équipement N2 se positionne de sorte que le module de transmission 101 du deuxième équipement 2 émette vers la première fibre optique FO1. Lors de la mesure sur la première fibre optique FO1, l'atténuateur du deuxième équipement N2 reste en position fermée, et le commutateur optique du premier équipement N1 en position normale, connecté à la première fibre optique FO1. Le premier équipement N1 envoie le signal de mesure $Sig_M$ vers le deuxième équipement N2. Ce signal de mesure est reçu par le deuxième équipement N2, et traité en électronique avec un délai variable, mais qui est mesuré précisément par le deuxième équipement N2. Le deuxième équipement N2 renvoie vers le premier équipement N1 sur la première fibre optique FO1 le signal en retour $Sig_R$ indiquant la mesure du temps de traitement interne $t_{int}$ par l'intermédiaire du commutateur optique du deuxième équipement N2 préalablement positionné pour émettre vers la première fibre optique FO1 et le coupleur optique. Ce signal en retour est reçu par le premier équipement N1, par l'intermédiaire de l'atténuateur du premier équipement N1 à présent ouvert et les coupleurs optiques. Le premier équipement N1 peut alors déterminer le temps de propagation sur la première fibre optique FO1.

La figure 2 représente une partie du système de détermination 1 selon un premier mode particulier de réalisation de l'invention. Un amplificateur 10 amplifie les signaux optiques transmis au moyen de la fibre optique FO1 dans le sens de propagation. Cet amplificateur 10 correspond à un équipement intermédiaire.

Un premier coupleur 11 est placé en entrée de l'amplificateur 10 et permet d'injecter un signal optique dans la fibre optique dans le sens inverse du sens de propagation.

Un deuxième coupleur 12 est placé en sortie de l'amplificateur 10 et permet d'extraire de la fibre optique FO1 un signal optique transmis dans le sens inverse du sens de propagation. Ce signal optique correspond au signal en retour.

Le système 1 comprend des moyens de régénération, plus précisément un module de remise en forme 22, constitué d'un récepteur, d'un amplificateur et d'un émetteur. Dans une forme particulière de réalisation, telle que représentée sur la figure 2, ces moyens de régénération sont prévus dans un dispositif de dérivation 20. Ces moyens peuvent également être intégrés dans l'équipement intermédiaire.

De façon optionnelle, le dispositif de dérivation 20 comprend en outre un filtre 21 centré sur la longueur d'onde transportant le signal en retour. Ce filtre permet d'éliminer l'ensemble des autres longueurs d'onde transportées par la fibre optique.

Le deuxième coupleur 12 extrait ainsi le signal en retour lorsqu'il est transmis et le dirige vers le dispositif de dérivation 20. Ce dernier le régénère et le signal en retour régénéré est réinjecté par le premier coupleur 11 dans la fibre optique dans le sens inverse du sens de propagation. Ainsi, le signal en retour n'est pas bloqué par l'amplificateur 10.

Dans les deuxième, troisième et quatrième modes de réalisation, l'équipement intermédiaire 30 comprend un premier amplificateur 31, suivi d'un module de compensation de dispersion chromatique 32 et d'un deuxième amplificateur 33. Pour l'ensemble de ces modes de réalisation, le système 1 comprend des moyens permettant d'éviter que le signal en retour ne soit bloqué au niveau de l'équipement intermédiaire. Le module de compensation 32 introduit un retard lors de la traversée du signal de mesure. Pour ces modes de réalisation, le système comprend des moyens de traitement, agencés pour obtenir un instant de réception du signal en retour prenant en compte un retard introduit par le module de compensation 32.

Dans le deuxième mode de réalisation, le signal de mesure est prélevé en entrée et en sortie de l'équipement intermédiaire dans le sens de propagation et les signaux prélevés sont renvoyés vers le premier équipement N1. Le premier équipement N1 détermine alors le retard introduit par le module de compensation 32 et peut corriger l'instant de réception du signal en retour.

La figure 3a représente une partie du système de détermination selon une première variante du deuxième mode particulier de réalisation de l'invention.

Les coupleurs 11 et 12 présentent les mêmes caractéristiques que ceux décrits précédemment en relation avec la figure 2.

Un coupleur 13 est placé en entrée de l'équipement intermédiaire et est agencé pour prélever de la fibre optique un signal optique transmis dans le sens de propagation. Afin de ne pas perturber les performances du réseau de transmission, seule une partie minime du signal optique est prélevée. Ce coupleur 13 étant placé avant amplification, on peut par exemple prélever de l'ordre de 10 % du signal en entrée.

Un coupleur 14 est placé en sortie de l'équipement intermédiaire et est agencé pour prélever de la fibre optique un signal optique transmis dans le sens de propagation. Afin de ne pas perturber les performances du réseau de transmission, seule une partie minime du signal optique est prélevée. Ce coupleur 14 étant placé après amplification, on peut par exemple prélever de l'ordre de 1 % du signal en sortie.

Le système 1, et plus précisément un dispositif de dérivation 40, comprend :

- un module retardateur 41, agencé pour introduire un retard LR à un signal optique ;
- un atténuateur 42, agencé pour atténuer un signal optique transmis par le module retardateur 41 ;
- un filtre optionnel 44, similaire au filtre 21 décrit en relation avec la figure 2 ;
- un module de remise en forme 45, similaire au module 22 décrit en relation avec la figure 2 ;
- un coupleur 43, comprenant trois entrées et connecté en sortie au filtre 44 ou au module de remise en forme 45 le cas échéant.

Ces moyens peuvent également être intégrés dans l'équipement intermédiaire.

Le module de remise en forme 45, et le filtre 44 le cas échéant, forment les moyens de régénération.

Le module retardateur 41 est relié au coupleur 14 et retarde ainsi le signal en sortie extrait. Ceci permet de garantir que les signaux optiques en entrée et en sortie de l'équipement intermédiaire n'entrent pas en collision.

Les trois entrées du coupleur 43 sont reliées à la sortie du coupleur 13, à la sortie du coupleur 12 et à la sortie de l'atténuateur 42.

L'atténuateur 42 permet d'ajuster le niveau du signal optique en sortie, étant donné que ce signal a été amplifié successivement par le premier amplificateur 31 et le deuxième amplificateur 32.

En phase de mesure, trois signaux optiques sont ainsi retransmis vers le premier équipement N1 :

- le signal de mesure prélevé en entrée, régénéré par le module 45 de remise en forme ;
- le signal de mesure prélevé en sortie, retardé par le module retardateur 41 et régénéré par le module 45 de remise en forme ;
- le signal en retour prélevé en sortie de l'équipement intermédiaire dans le sens inverse du sens de propagation, régénéré par le module 45 de remise en forme.

Le module de traitement 103 détermine alors le retard introduit par le module de compensation à partir des signaux prélevés en entrée et en sortie de l'équipement intermédiaire.

Ainsi dans ce deuxième mode de réalisation, le module de traitement 103 et le dispositif de dérivation 40 coopèrent pour obtenir un instant de réception du signal en retour prenant en compte le retard introduit par le module de compensation.

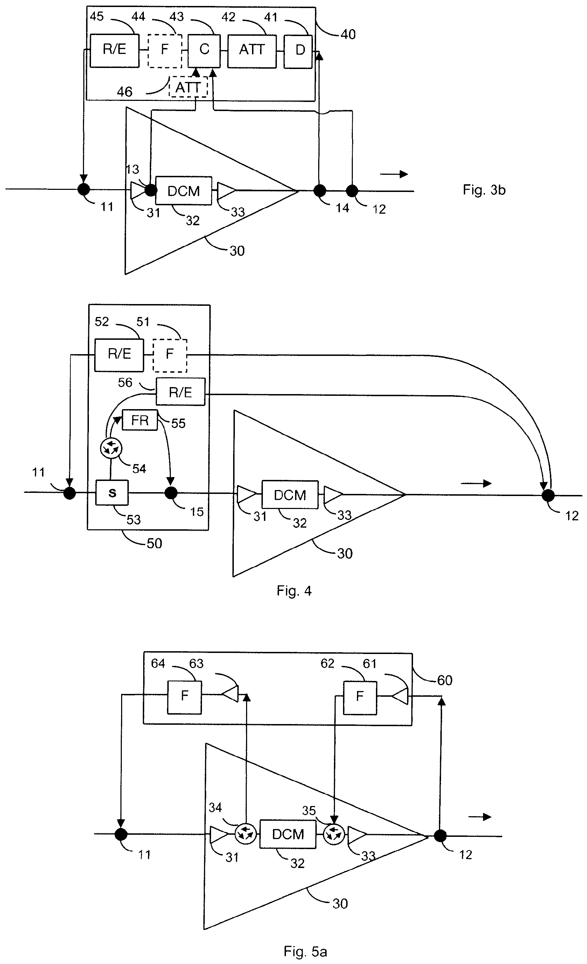

La deuxième variante de ce deuxième mode de réalisation, représentée à la figure 3b, est prévue pour fonctionner avec un équipement intermédiaire 30 offrant un accès au signal optique en sortie du premier amplificateur 31. Ceci permet de simplifier le réajustement des paramètres de transmission de la liaison. Le coupleur 13 est placé dans ce cas en sortie du premier amplificateur 31 et peut par exemple prélever de l'ordre de 1 % du signal optique.

Le dispositif de dérivation 40 peut comprendre en complément des éléments déjà décrits en relation avec la figure 3a un atténuateur 46 permettant d'ajuster le niveau du signal optique en entrée du module de remise en forme 45.

Il est ici souligné, que lorsque le signal en retour est transmis sur une longueur d'onde différente de celle utilisée pour le signal de mesure, le filtre 44 est adapté en fonction de ces deux longueurs d'onde.

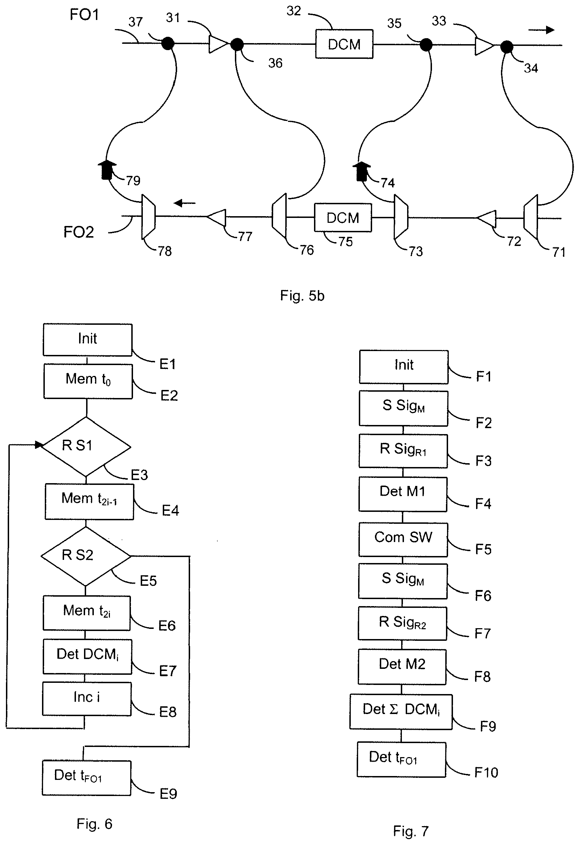

La figure 6 représente les étapes d'un procédé de détermination d'un temps de propagation mis en oeuvre dans un système comprenant au moins un dispositif de dérivation 40 selon le deuxième mode particulier de réalisation de l'invention. Le système peut également comprendre un ou des dispositifs de dérivation 20 selon le premier mode de réalisation. Il est ici souligné que les étapes décrites précédemment en relation avec les moyens de bouclage, notamment les étapes de commande des moyens de bouclage, ne sont pas décrites de nouveau mais font partie du procédé.

Le premier équipement N1 mémorise par configuration l'ensemble des retards LR introduits par le ou les dispositifs de dérivation 40 selon le deuxième mode de réalisation. On note par la suite $LR_k$ le retard de durée fixe apporté par le dispositif de dérivation 40 disposé sur le site $S_k$.

Dans une étape E1 d'initialisation, une variable i est initialisée à la valeur un.

Dans une étape E2, le premier équipement N1 émet le signal de mesure $Sig_M$ et mémorise l'instant $t_0$ d'émission de celui-ci.

Dans une étape E3, le premier équipement N1 vérifie s'il a reçu un premier signal optique. Si tel est le cas, dans une étape E4, le premier équipement N1 mémorise l'instant de réception $t_{2i-1}$ de ce premier signal optique. Il s'agit du signal de mesure prélevé en entrée de l'équipement intermédiaire du site $S_i$.

Un deuxième signal est reçu dans une étape E5. Cette attente peut être supervisée par un temporisateur. Il s'agit du signal de mesure prélevé en sortie de l'équipement intermédiaire, retardé du retard $LR_i$. Dans une étape E6, le premier équipement N1 mémorise l'instant de réception $t_{2i}$ du signal de mesure prélevé en sortie de l'équipement intermédiaire du site $S_i$.

Dans une étape E7, le premier équipement détermine à partir des instants de réception $t_{2i-1}$, $t_{2i}$ et du retard $LR_i$, une durée correspondant au retard $DCM_i$ introduit par le module de compensation de dispersion chromatique de l'équipement intermédiaire du site $S_i$. Plus précisément, $DCM_i = t_{2i} - LR_i - t_{2i-1}$.

Dans une étape E8, la variable i est incrémentée de un.

Puis, le premier équipement N1 repasse à l'étape E3 en attente de réception du premier signal.

Lorsqu'aucun signal n'est reçu à l'étape E5, le dernier signal reçu correspond au signal en retour $Sig_R$. Le signal en retour bouclé au niveau du deuxième équipement N2 a été dérivé au niveau des différents équipements intermédiaires 30, 40 présents sur le lien optique entre les premier et deuxième équipements. Le dernier instant de réception mémorisé correspond alors à l'instant de réception $t_R$ du signal en retour.

Dans une étape E9, le premier équipement N1 détermine le temps de propagation entre les premier et deuxième équipements au moyen de la fibre optique FO1 :

$$t_{FO1} = (t_R - t_0)/2 + \Sigma\, DCM_i$$

Ce temps de propagation est corrigé éventuellement du temps interne de traitement $t_{int}$.

Il est ici souligné que les différents instants de réception mémorisés permettent également de déterminer un temps de propagation entre deux équipements intermédiaires à partir de l'instant de réception du signal en sortie de l'équipement intermédiaire du site Si et de l'instant de réception du signal en entrée de l'équipement intermédiaire du site $S_{i+1}$.

Dans le troisième mode de réalisation, la mesure est réalisée en deux phases de mesure distinctes : dans une première phase, le signal de mesure transite dans l'équipement intermédiaire 40 et dans une deuxième phase, le signal de mesure contourne l'équipement intermédiaire. Deux signaux en retour sont ainsi reçus par le premier équipement N1. Le premier équipement N1 détermine alors le retard introduit par l'ensemble des modules de compensation de dispersion chromatique 32 et peut corriger l'instant de réception du signal en retour. La figure 4 représente une partie d'un système 1 dans son environnement selon le troisième mode particulier de réalisation de l'invention.

Le coupleur 11 présente les mêmes caractéristiques que celui décrit précédemment en relation avec la figure 2.

Le coupleur 12 présente les mêmes caractéristiques que celui décrit précédemment en relation avec la figure 2 et permet en outre d'injecter un signal optique dans la fibre optique dans le sens de propagation.

Le système 1, et plus précisément un dispositif de dérivation 50, comprend :

- un filtre optionnel 51, similaire au filtre 21 décrit en relation avec la figure 2 ;
- un module de remise en forme 52, similaire au module de remise en forme 22 décrit en relation avec la figure 2 ;
- un commutateur 53, agencé pour dans une première position transmettre un signal optique transmis dans le sens de propagation vers l'équipement intermédiaire 30 et dans une deuxième position commuter un signal optique en entrée vers un circulateur optique 54 ;
- le circulateur 54 ;
- un filtre réflectif 55, prévu pour réfléchir la longueur d'onde sur laquelle est transmis le signal de mesure vers le circulateur 54 et transmettre les signaux optiques autres que le signal de mesure vers un coupleur 15 ;
- un module de remise en forme 56 relié au circulateur 54, agencé pour recevoir du circulateur 54 le signal de mesure réfléchi, l'amplifier et le transmettre au coupleur 12, en sortie de l'équipement intermédiaire ;
- le coupleur 15, agencé pour réinjecter un signal optique reçu dans le sens de propagation de la fibre optique.

Ces moyens peuvent également être intégrés dans l'équipement intermédiaire.

Le module de remise en forme 51, et le filtre 52 le cas échéant, forment les moyens de régénération.

Le filtre réflectif 55 est par exemple un réseau de Bragg réflectif. Un exemple d'un tel filtre est décrit dans l'article intitulé « First tunable narrowband 1.55μm optical drop filter using a dynamic photorefractive grating in iron doped indium phosphide » de D. Hervé et al. publié en 1994 dans la revue « Electronics Letters ». Un tel filtre peut être très fin, quelques dixièmes de nm et réfléchir plus de 99%. Ce troisième mode de réalisation est complètement statique si le filtre ne fonctionne que sur une longueur d'onde fixe pour le signal de mesure.

Le commutateur 53 est prévu pour commuter entre les deux positions sur commande du premier équipement N1.

Le circulateur 54, le filtre réflectif 55 et le coupleur 15 forment des moyens de dérivation du signal de mesure en entrée, disposés en entrée de l'équipement intermédiaire 30 et agencés pour réinjecter en sortie de l'équipement intermédiaire 30 uniquement le signal de mesure, les signaux optiques autres que le signal de mesure étant réinjectés en entrée de l'équipement intermédiaire 30.

Lors de la première phase de mesure, le commutateur 53 est dans la première position et le premier équipement N1 reçoit un premier signal en retour émis à partir d'un signal de mesure qui a traversé le module de compensation 32. Dans la deuxième phase de mesure, sur commande du module de traitement 103, le commutateur 53 est dans la deuxième position et le premier équipement N1 reçoit un deuxième signal en retour émis à partir d'un signal de mesure qui a contourné le module de compensation 32.

Le module de traitement 103 détermine alors le retard introduit par le module de compensation à partir des instants d'émission des premier et deuxième signaux de mesure et des instants de réception des premier et deuxième signaux en retour.

Ainsi dans ce troisième mode de réalisation, le module de traitement 103 et le dispositif de dérivation 50 coopèrent pour obtenir un instant de réception du signal en retour prenant en compte le retard introduit par le module de compensation.

La figure 7 représente les étapes d'un procédé de détermination d'un temps de propagation mis en oeuvre dans un système comprenant au moins un dispositif de dérivation 50 selon le troisième mode particulier de réalisation de l'invention. Le système peut également comprendre un ou des dispositifs de dérivation 20 selon le premier mode de réalisation. Il est ici souligné que les étapes décrites précédemment en relation avec les moyens de bouclage, notamment de commande des moyens de bouclage, ne sont pas décrites de nouveau mais font partie du procédé.

Dans une étape F1 d'initialisation, les variables du procédé sont initialisées. Le commutateur 53 est dans la première position.

Dans une étape F2, le premier équipement N1 initie la première phase de mesure et émet le signal de mesure. Il mémorise également l'instant $t_{e1}$ d'émission de celui-ci.

Dans une étape F3, le premier équipement N1 reçoit un premier signal en retour Sig$_{R1}$ et mémorise l'instant de réception t$_{R1}$ de celui-ci. Le signal en retour bouclé au niveau du deuxième équipement N2 a été dérivé au niveau des différents équipements intermédiaires 30, 50 présents sur le lien optique entre les premier et deuxième équipements.

Dans une étape F4, le premier équipement N1 détermine une première valeur M1, égale à t$_{R1}$-t$_{e1}$. Ceci termine la première phase de mesure. Cette première valeur M1 correspond au double du temps de propagation sur la fibre optique augmenté du ou des retards des modules de compensation présents sur la fibre optique.

Dans une étape F5, le premier équipement N1 initie la deuxième phase de mesure et commande la commutation du commutateur 53 vers la deuxième position.

Dans une étape F6, le premier équipement N1 émet le signal de mesure. Il mémorise également l'instant t$_{e2}$ d'émission de celui-ci.

Dans une étape F7, le premier équipement N1 reçoit un deuxième signal en retour Sig$_{R2}$ et mémorise l'instant de réception t$_{R2}$ de celui-ci. Pour rappel, le signal de mesure a contourné le module de compensation 32. Le signal en retour bouclé au niveau du deuxième équipement N2 a été dérivé au niveau des différents équipements intermédiaires 30, 50 présents sur le lien optique entre les premier et deuxième équipements.

Dans une étape F8, le premier équipement N1 détermine une deuxième valeur M2, égale à t$_{R2}$-t$_{e2}$. Ceci termine la deuxième phase. Cette deuxième valeur M2 correspond au double du temps de propagation sur la fibre optique.

Dans une étape F9, le premier équipement commande la commutation du commutateur 53 vers la première position puis détermine la valeur cumulée du ou des retards introduits par les modules de compensation présents sur la fibre optique à partir des première et deuxième valeurs mesurées. Plus précisément, $\Sigma$ DCM$_i$= M1-M2.

Dans une étape F10, le premier équipement détermine alors le temps de propagation entre les premier et deuxième équipements au moyen de la fibre optique FO1 :

$$t_{FO1} = (t_{R1} + \Sigma\, DCM_i - t_{e1})/2$$

Ce temps de propagation est corrigé éventuellement du temps de traitement interne t$_{int}$.

Le quatrième mode de réalisation est particulièrement adapté au cas où l'équipement intermédiaire 30 est agencé pour permettre un passage d'un signal optique uniquement dans le module de compensation 32. A cet effet, l'équipement intermédiaire 30 comprend un premier circulateur 34 situé entre le premier amplificateur 31 et le module de compensation 32 et un deuxième circulateur 35 situé entre le module de compensation 32 et le deuxième amplificateur 33. Les premier et deuxième circulateurs 34 et 35 permettent de dissocier les signaux optiques des deux sens de propagation traversant le module de compensation 32. Dans ce quatrième mode de réalisation, le signal en retour traverse le module de compensation 32.

La figure 5a représente un dispositif de dérivation 60 dans son environnement selon une première variante du troisième mode particulier de réalisation de l'invention.

Les coupleurs 11 et 12 présentent les mêmes caractéristiques que ceux décrits précédemment en relation avec la figure 2.

Le système 1, et plus précisément un dispositif de dérivation 60, comprend :

- un premier étage, composé d'un amplificateur 61 et d'un filtre 62 régénérant le signal en retour extrait par le coupleur 12 ;
- un deuxième étage, composé d'un amplificateur 63 et d'un filtre 64, régénérant un signal optique obtenu du circulateur 34.

Ces moyens peuvent également être intégrés dans l'équipement intermédiaire.

Les premier et deuxième étages forment les moyens de régénération.

En sortie du premier étage, le signal optique est injecté au niveau du circulateur 35 de l'équipement intermédiaire 30. Le signal en sortie du circulateur 34, c'est-à-dire le signal en sortie du premier étage après passage dans le module de compensation 32, est injecté en entrée du deuxième étage.

Les amplificateurs 61 et 63 sont par exemple des amplificateurs optiques à semi conducteurs (SOA) et permettent de garantir que le signal en retour a une puissance suffisante pour être traité par le module de compensation 32. Les filtres 62 et 64 permettent de s'assurer que seule la longueur d'onde de mesure est renvoyée dans le sens inverse du sens de propagation.

Ainsi dans ce quatrième mode de réalisation, le dispositif de dérivation 60 traite le signal en retour, afin que l'instant de réception du signal en retour au premier équipement N1 prenne en compte le retard introduit par le module de compensation 32.

Une deuxième variante de ce quatrième mode de réalisation est représentée sur la figure 5b. Sur cette figure 5b est représentée une deuxième fibre optique FO2 prévue pour la transmission du deuxième équipement N2 vers le premier équipement N1. Un équipement intermédiaire, composé d'un premier amplificateur 72, d'un module de compensation 75 et d'un deuxième amplificateur 77, est représenté sur cette deuxième fibre optique. Selon l'invention, un premier multiplexeur 71 permettant d'insérer une longueur d'onde du signal de mesure et un premier démultiplexeur 73 permettant d'extraire la longueur d'onde du signal de mesure sont prévus respectivement en entrée et en sortie du premier amplificateur 72. De même, un deuxième multiplexeur 76 et un deuxième démultiplexeur 78 sont prévus en entrée et en sortie du deuxième amplificateur 77. Sur, un premier coupleur 34 disposé sur la première fibre optique FO1 prélève le signal en retour transmis sur celle-ci et le transmet en entrée du premier multiplexeur 71. Le signal en retour est alors amplifié par le premier amplificateur 72. En sortie de celui-ci, le premier démultiplexeur 73 transmet le signal en retour amplifié en entrée du module de compensation 32 par l'intermédiaire d'un isolateur 74 et d'un coupleur 35 disposé sur la première fibre optique FO1. Une fois traité par le module de compensation 32, un coupleur 36 disposé en sortie de ce dernier prélève le signal en retour et le transmet en entrée du deuxième multiplexeur 76. Le signal en retour est alors amplifié par le deuxième amplificateur 77. Le deuxième démultiplexeur 78 transmet le signal en retour amplifié vers la première fibre optique FO1 par l'intermédiaire d'un isolateur 79 et d'un coupleur 37.

Ainsi, dans cette deuxième variante, on utilise des moyens de régénération présents dans l'équipement intermédiaire disponible sur la deuxième fibre optique FO2.

Pour ces deux variantes, le module de traitement 103 détermine alors le temps de propagation entre les premier et deuxième équipements au moyen de la fibre optique FO1 à partir de l'instant d'émission $t_0$ du signal de mesure et de l'instant de réception $t_R$ du signal en retour. Plus précisément, on a dans ce cas $t_{FO1} = (t_R - t_0)/2$, corrigé le cas échéant du temps de traitement interne $t_{int}$, comme décrit précédemment en l'absence de module de compensation.

Le procédé de détermination d'un temps de propagation, tel que décrit précédemment, trouve une application particulièrement avantageuse pour déterminer une asymétrie de deux fibres optiques. Le premier équipement N1 détermine un premier temps de propagation $T_{FO1}$ d'un signal optique au moyen de la première fibre optique FO1 par la mise en oeuvre du procédé de détermination d'un temps de propagation tel que décrit précédemment en coopérant avec le deuxième équipement N2 et transmet ce premier temps de propagation au deuxième équipement N2. Le deuxième équipement N2 détermine un deuxième temps de propagation $t_{FO2}$ d'un signal optique au moyen de la deuxième fibre optique FO2 par la mise en oeuvre du procédé de détermination d'un temps de propagation tel que décrit précédemment en coopérant avec le premier équipement N1 et transmet ce deuxième temps de propagation au premier équipement N1. Le premier équipement N1 détermine une asymétrie entre les deux fibres optiques. Alternativement, il est également possible de déterminer le temps de propagation du signal de mesure sur la première fibre, puis le temps d'aller du signal de mesure sur la première fibre et de retour du signal en retour sur la deuxième fibre, pour en déduire le temps de propagation sur la deuxième fibre. Une fois l'asymétrie déterminée, le premier équipement N1 peut ainsi corriger des messages PTP reçus ultérieurement pour compenser cette asymétrie, tel que cela est décrit dans la section 11.6 de la norme IEEE 1588-2008.

Pour les différents modes de réalisation, à l'exception de la deuxième variante du quatrième mode de réalisation correspondant à la figure 5b, le signal de mesure peut être porté par un canal utilisé pour acheminer du trafic utilisateur en dehors de la période de mesure. Il peut par exemple s'agir d'un lien optique non WDM transportant du trafic, ou bien dans le cas d'un système WDM, d'une longueur d'onde utilisée également pour transporter du trafic. Dans ce cas, la mesure ne peut pas être effectuée lorsque du trafic est transporté dans le canal, car l'émission du signal en retour sur la première fibre optique perturbe la transmission du trafic utilisateur sur les première et deuxième fibres. Il est donc nécessaire de bloquer le trafic utilisateur sur ce canal pendant la mesure du temps de propagation.

Dans le cas WDM, le fonctionnement des autres longueurs d'onde n'est pas perturbé.

On peut également utiliser un canal de transmission dédié à la mesure. Il peut par exemple s'agir d'une longueur d'onde dédiée pour transporter le signal de mesure. La longueur d'onde sélectionnée doit traverser tous les éléments qui contribuent au temps de propagation.

Il est ici souligné que lorsque la mesure du temps de propagation est effectuée sur une longueur d'onde dédiée, il est possible de déduire le temps de propagation sur les autres longueurs d'onde utiles transportant des données utilisateurs. Cependant, du fait de la dispersion chromatique, les délais sur les différentes longueurs d'onde ne sont pas exactement les mêmes. Selon la distance de la liaison, cet écart peut être plus ou moins important. Par exemple, on peut avoir jusqu'à 40 nanosecondes d'incertitude sur 80 kilomètres de liaison non compensée due à la dispersion chromatique pour 30 nanomètres d'écart de longueur d'onde. Cet écart peut atteindre 80 nanomètres entre les bandes C et L. Dans ce cas, on voit que l'écart n'est pas négligeable par rapport aux objectifs d'exactitude. Afin de corriger cette erreur due à la dispersion chromatique, il est possible de compenser automatiquement par calcul la différence de mesure du temps de propagation entre la longueur d'onde utilisée pour la mesure et chaque longueur d'onde utile à partir de la connaissance de chaque longueur d'onde et de la distance du lien, qui est connue de façon assez précise grâce à la mesure du temps de propagation. Plusieurs modèles sont possibles pour effectuer ce calcul (voir par exemple, Govind P. Agrawal, "Nonlinear Fiber Optics", Academic Press, 1989). Il est important toutefois que les valeurs de la dispersion par longueur d'onde soient mémorisées dans les équipements.

De plus, lorsque la mesure du temps de propagation est effectuée sur une longueur d'onde dédiée, il est possible d'utiliser des longueurs d'onde différentes dans le sens aller et retour. Ce cas de figure peut être considéré comme un cas où les signaux sont différents dans les sens aller et retour. Il convient dans ce cas de prendre en compte et de compenser les effets de la dispersion chromatique.

Le module de traitement 103 du premier équipement N1 est agencé pour mettre en oeuvre les étapes du procédé de détermination d'un temps de propagation précédemment décrit exécutées par l'équipement. Il s'agit de préférence de modules logiciels comprenant des instructions logicielles pour faire exécuter les étapes du procédé de détermination d'un temps de propagation précédemment décrit, mises en oeuvre par un équipement optique. L'invention concerne donc aussi :

- un programme pour équipement, comprenant des instructions de programme destinées à commander l'exécution des étapes du procédé de détermination d'un temps de propagation précédemment décrit qui sont exécutées par ledit équipement, lorsque ledit programme est exécuté par un processeur de celui-ci ;
- un support d'enregistrement lisible par un équipement sur lequel est enregistré le programme pour équipement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

**Revendications**

1. Système (1) de détermination d'un temps de propagation d'un signal optique dans une fibre optique (FO1) d'une liaison optique, le système comprenant :

    un premier équipement (N1) comprenant des moyens de transmission (101) d'un signal optique de mesure dans un sens de propagation vers un deuxième équipement (N2) du système au moyen de ladite fibre optique (FO1), des moyens de réception (102) d'un signal optique en retour en provenance du deuxième équipement au moyen de ladite fibre optique dans le sens inverse du sens de propagation et des moyens de détermination (103) dudit temps de propagation à partir d'un instant d'émission du signal de mesure et d'un instant de réception du signal en retour;
    un équipement intermédiaire (30), le système étant configuré de sorte que les signaux optiques transmis au moyen de ladite fibre optique traversent au moins ledit équipement intermédiaire (30), ledit équipement intermédiaire (30) comprenant au moins un amplificateur (31), agencé pour amplifier des signaux optiques reçus dans le sens de propagation et bloquer des signaux optiques reçus dans le sens inverse de propagation, et un module de compensation de dispersion chromatique (32), distinct de l'amplificateur (31) et introduisant un retard ; des premiers moyens d'extraction (12) de la fibre optique du signal optique en retour, lesdits premiers moyens d'extraction étant situés en sortie dudit équipement intermédiaire (30) ; des moyens de régénération (45 ; 52 ; 61-63 ; 72-77) du signal optique en retour extrait par les premiers moyens d'extraction ; des moyens d'injection (11, 37) du signal optique de retour, extrait et régénéré, sur la fibre optique, lesdits moyens d'injection étant placés en entrée dudit équipement intermédiaire (30) ; et des moyens de traitement, agencés pour obtenir un instant de réception du signal en retour prenant en compte ledit retard introduit par ledit module de compensation.

2. Système de détermination d'un temps de propagation selon la revendication 1, dans lequel les moyens de détermination (103) dans le premier équipement (N1) et les moyens suivants au niveau de l'équipement intermédiaire forment les moyens de traitement :

    - des deuxièmes moyens d'extraction (13) de la fibre optique du signal de mesure en entrée dudit équipement intermédiaire, ledit signal en entrée étant transmis dans le sens de propagation ;
    - des troisièmes moyens d'extraction (14) de la fibre optique du signal de mesure en sortie dudit équipement intermédiaire, ledit signal en sortie étant transmis dans le sens de propagation ;
    - des moyens de traitement (41) du signal en sortie extrait, agencés pour retarder le signal en sortie extrait,

le signal en entrée extrait et le signal en sortie une fois traité étant également régénérés par les moyens de régénération, et dans lequel les moyens de détermination (103) sont en outre agencés pour obtenir le retard introduit par le module de compensation à partir des signaux en entrée et en sortie de l'équipement intermédiaire.

3. Système de détermination d'un temps de propagation selon la revendication 1, dans lequel les moyens de détermination (103) dans le premier équipement (N1) et les moyens suivants au niveau de l'équipement intermédiaire forment les moyens de traitement :

- des moyens de dérivation (54,55), agencés pour réinjecter en sortie dudit équipement intermédiaire uniquement le signal de mesure, les signaux optiques autres que le signal de mesure étant réinjectés en entrée dudit équipement intermédiaire :
- des moyens de commutation (53) d'un signal optique transmis dans le sens de propagation, placés en entrée dudit équipement intermédiaire, agencés pour commuter le signal optique en entrée vers les moyens de dérivation,

et dans lequel les moyens de détermination sont en outre agencés pour mettre en oeuvre une première mesure, commander les moyens de commutation et mettre en oeuvre une deuxième mesure afin de déterminer le retard introduit par le module de compensation.

4. Système de détermination d'un temps de propagation selon la revendication 1, dans lequel,
ledit équipement intermédiaire (N1) étant en outre agencé pour permettre un passage du signal optique en retour uniquement dans ledit module de compensation, ledit module de compensation (32) forme les moyens de traitement et les moyens de régénération sont composés de deux étages :

   - un premier étage (61, 62) régénérant le signal optique en retour extrait, avant passage dans ledit module de compensation,
   - un deuxième étage (63, 64) régénérant le signal optique en retour après passage dans ledit module de compensation du signal optique en retour en sortie du premier étage.

5. Système de détermination d'un temps de propagation selon la revendication 4, dans lequel les moyens de régénération font partie d'un autre équipement intermédiaire prévu pour la transmission d'un signal optique en provenance du deuxième équipement vers le premier équipement au moyen d'une autre fibre optique (FO2), distincte de ladite fibre optique (FO1).

## Patentansprüche

1. System (1) zur Bestimmung einer Ausbreitungszeit eines optischen Signals in einer Lichtleitfaser (F01) einer optischen Verknüpfung, wobei das System Folgendes umfasst:

   eine erste Ausstattung (N1), die Mittel zum Übertragen (101) eines optischen Messsignals in eine Ausbreitungsrichtung zu einer zweiten Ausstattung (N2) des Systems mittels der Lichtleitfaser (F01), Mittel zum Empfangen (102) eines optischen Rückmeldungssignals von der zweiten Ausstattung mittels der Lichtleitfaser in die umgekehrte Richtung der Ausbreitungsrichtung sowie Mittel zum Bestimmen (103) der Ausbreitungszeit ausgehend von einem Sendeaugenblick des Messsignals und einem Empfangsaugenblick des Rückmeldungssignals;
eine Zwischenausstattung (30), wobei das System derart konfiguriert ist, dass die mittels der Lichtleitfaser übertragenen optischen Signale mindestens die Zwischenausstattung (30) durchqueren, wobei die Zwischenausstattung (30) mindestens einen Verstärker (31) umfasst, der eingerichtet ist, um optische Signale zu verstärken, die in die Ausbreitungsrichtung empfangen werden, und optische Signale zu blockieren, die in die Richtung umgekehrt zu der Ausbreitung empfangen werden, sowie ein Kompensationsmodul chromatischer Streuung (32), das von dem Verstärker (31) getrennt ist und eine Verzögerung einführt;
erste Extraktionsmittel (12) des optischen Rückmeldungssignals aus der Lichtleitfaser, wobei die ersten Extraktionsmittel am Ausgang der Zwischenausstattung (30) liegen;
Mittel zum Regenerieren (45; 52; 61 bis 63; 72 bis 77) des optischen Rückmeldungssignals, das durch die ersten Extraktionsmittel extrahiert wird;
Mittel zum Injizieren (11, 37) des extrahierten und regenerierten optischen Rückmeldungssignals auf der Lichtleitfaser, wobei die Injektionsmittel am Eingang der Zwischenausstattung (30) platziert sind; und
Verarbeitungsmittel, die eingerichtet sind, um einen Empfangsaugenblick des Rückmeldungssignals unter Berücksichtigung der Verzögerung, die von dem Kompensationsmodul eingeführt wird, zu erhalten.

2. System zur Bestimmung einer Ausbreitungszeit nach Anspruch 1, wobei die Bestimmungsmittel (103) in der ersten Ausstattung (N1) und die darauffolgenden Mittel im Bereich der Zwischenausstattung die Verarbeitungsmittel bilden:

   - der zweiten Extraktionsmittel (13) des Messsignals aus der Lichtleitfaser am Eingang der Zwischenausstattung, wobei das Eingangssignal in die Ausbreitungsrichtung übertragen wird;
   - der dritten Extraktionsmittel (14) des Messsignals aus der Lichtleitfaser am Ausgang der Zwischenausstattung, wobei das Ausgangssignal in die Ausbreitungsrichtung übertragen wird;
   - der Verarbeitungsmittel (41) des extrahierten Ausgangssignals, die eingerichtet sind, um das extrahierte Ausgangssignal zu verzögern,

wobei das extrahierte Eingangssignal und das Ausgangssignal, sobald sie verarbeitet sind, ebenfalls durch die Regenerierungsmittel regeneriert werden, und wobei die Bestimmungsmittel (103) außerdem eingerichtet sind, um die Verzögerung, die von dem Kompensationsmodul eingeführt wird, ausgehend von den Eingangs- und Ausgangssignalen der Zwischenausstattung zu erhalten.

**3.** System zur Bestimmung einer Ausbreitungszeit nach Anspruch 1, wobei die Bestimmungsmittel (103) in der ersten Ausstattung (N1) und die darauffolgenden Mittel im Bereich der Zwischenausstattung die Verarbeitungsmittel bilden:

- der Abzweigmittel (54, 55), die eingerichtet sind, um am Ausgang der Zwischenausstattung erneut nur das Messsignal zu injizieren, wobei die anderen optischen Signale als das Messsignal am Eingang der Zwischenausstattung wieder injiziert werden:
- der Umschaltmittel (53) eines optischen Signals, das in die Ausbreitungsrichtung übertragen wird, die am Eingang der Zwischenausstattung platziert sind, die eingerichtet sind, um das optische Eingangssignal zu den Abzweigmitteln umzuschalten,

und wobei die Bestimmungsmittel außerdem eingerichtet sind, um eine erste Messung umzusetzen, die Umschaltmittel zu steuern und eine zweite Messung umzusetzen, um die Verzögerung zu bestimmen, die durch das Kompensationsmodul eingeführt wird.

**4.** System zur Bestimmung einer Ausbreitungszeit nach Anspruch 1, wobei die Zwischenausstattung (N1) außerdem eingerichtet ist, um ein Durchgehen des optischen Rückmeldungssignals nur in dem Kompensationsmodul zu erlauben, wobei das Kompensationsmodul (32) die Verarbeitungsmittel bildet, und die Regenerierungsmittel aus zwei Stufen bestehen:

- eine erste Stufe (61, 62), die das extrahierte optische Rückmeldungssignal vor dem Durchgehen in dem Kompensationsmodul regeneriert,
- eine zweite Stufe (63, 64), die das optische Rückmeldungssignal nach dem Durchgehen in dem Kompensationsmodul des optischen Rückmeldungssignals am Ausgang der ersten Stufe regeneriert.

**5.** System zur Bestimmung einer Ausbreitungszeit nach Anspruch 4, wobei die Regenerierungsmittel zu einer anderen Zwischenausstattung gehören, die für die Übertragung eines optischen Signals, das von der zweiten Ausstattung kommt, zu der ersten Ausstattung mittels einer anderen Lichtleitfaser (F02), die von der Lichtleitfaser (F01) getrennt ist, vorgesehen ist.

## Claims

**1.** System (1) for determining a propagation time of an optical signal in an optical fibre (FO1) of an optical link, the system comprising:

a first item of equipment (N1) comprising means (101) for transmitting a measurement optical signal in a propagation direction to a second item of equipment (N2) of the system by means of said optical fibre (FO1), means (102) for receiving a return optical signal coming from the second item of equipment by means of said optical fibre in the opposite direction to the propagation direction and means (103) for determining said propagation time from an emission time of the measurement signal and a reception time of the return signal;

an intermediate item of equipment (30), the system being configured so that the optical signals transmitted by means of said optical fibre pass through at least said intermediate item of equipment (30), said intermediate item of equipment (30) comprising at least one amplifier (31) arranged to amplify optical signals received in the propagation direction and block optical signals received in the back propagation direction, and a module (32) for compensating for chromatic dispersion, said module being distinct from the amplifier (31) and introducing a delay;

first means (12) for extracting, from the optical fibre, the return optical signal, said first extracting means being located at the output of said intermediate item of equipment (30);

means (45; 52; 61-63; 72-77) for regenerating the return optical signal extracted by the first extracting means;

means (11, 37) for injecting the extracted and regenerated return optical signal into the optical fibre, said injecting means being placed at the input of said intermediate item of equipment (30); and

processing means arranged to obtain a reception time of the return signal taking into account said delay introduced by said compensating module.

**2.** System for determining a propagation time according to Claim 1, wherein the determining means (103) in the first item of equipment (N1) and the following means in the intermediate item of equipment form the processing means:

- second means (13) for extracting, from the optical fibre, the measurement signal at the input of said intermediate item of equipment, said input signal being transmitted in the propagation direction;

- third means (14) for extracting, from the optical fibre, the measurement signal output from said intermediate item of equipment, said output signal being transmitted in the propagation direction;

- means (41) for processing the extracted output signal, said means being arranged to delay the extracted output signal,

the extracted input signal and the output signal once processed also being regenerated by the regenerating means,

and wherein the determining means (103) are furthermore arranged to obtain the delay introduced by the compensating module from the input and output signals of the intermediate item of equipment.

3. System for determining a propagation time according to Claim 1, wherein the determining means (103) in the first item of equipment (N1) and the following means in the intermediate item of equipment form the processing means:

- bypassing means (54, 55), arranged to reinject at the output of said intermediate item of equipment solely the measurement signal, optical signals other than the measurement signal being reinjected at the input of said intermediate item of equipment;

- means (53) for communicating an optical signal transmitted in the propagation direction, said means being placed at the input of said intermediate item of equipment, and being arranged to switch the input optical signal to the bypassing means,

and wherein the determining means are furthermore arranged to carry out a first measurement, to control the switching means and to carry out a second measurement in order to determine the delay introduced by the compensating module.

4. System for determining a propagation time according to Claim 1, wherein, said intermediate item of equipment (N1) furthermore being arranged to allow the return optical signal to pass solely to said compensating module, said compensating module (32) forms the processing means and the regenerating means are composed of two stages:

- a first stage (61, 62) regenerating the extracted return optical signal, before passage into said compensating module,

- a second stage (63, 64) regenerating the return optical signal after the return optical signal output from the first stage has passed through said compensating module.

5. System for determining a propagation time according to Claim 4, wherein the regenerating means form part of another intermediate item of equipment provided to transmit an optical signal coming from the second item of equipment to the first item of equipment by means of another optical fibre (F02), which optical fibre is distinct from said optical fibre (FO1).

Fig. 1

Fig. 2

Fig. 3a

Fig. 3b

Fig. 4

Fig. 5a

FO1

DCM

DCM

FO2

Fig. 5b

**Fig. 6**

- Init — E1
- Mem $t_0$ — E2
- R S1 — E3
- Mem $t_{2i-1}$ — E4
- R S2 — E5
- Mem $t_{2i}$ — E6
- Det DCM$_i$ — E7
- Inc i — E8
- Det $t_{FO1}$ — E9

**Fig. 7**

- Init — F1
- S Sig$_M$ — F2
- R Sig$_{R1}$ — F3
- Det M1 — F4
- Com SW — F5
- S Sig$_M$ — F6
- R Sig$_{R2}$ — F7
- Det M2 — F8
- Det $\Sigma$ DCM$_i$ — F9
- Det $t_{FO1}$ — F10

## RÉFÉRENCES CITÉES DANS LA DESCRIPTION

**Documents brevets cités dans la description**

- FR 2896644
- GB 2416587 A
- US 6876488 B
- EP 1758279 A

**Littérature non-brevet citée dans la description**

- **D. HERVÉ et al.** First tunable narrowband $1.55\mu m$ optical drop filter using a dynamic photorefractive grating in iron doped indium phosphide. *Electronics Letters,* 1994
- **GOVIND P. AGRAWAL.** Nonlinear Fiber Optics. Academic Press, 1989